Europäisches Patentamt

(19) European Patent Office

Office européen des brevets

(11) Numéro de publication: **0 251 894**
**B1**

(12) **FASCICULE DE BREVET EUROPEEN**

(45) Date de publication du fascicule du brevet:
**06.12.89**

(51) Int. Cl.⁴: **G01L 1/24**, G01N 3/06

(21) Numéro de dépôt: **87401440.0**

(22) Date de dépôt: **23.06.87**

(54) **Procédé de mesure des contraintes principales dans des substrats transparents, ayant des propriétés photoélastiques assemblés par collage.**

(30) Priorité: **23.06.86 FR 8609044**

(43) Date de publication de la demande:
**07.01.88 Bulletin 88/1**

(45) Mention de la délivrance du brevet:
**06.12.89 Bulletin 89/49**

(84) Etats contractants désignés:
**DE FR GB IT NL**

(56) Documents cités:
**GB-A- 914 816**
**US-A- 3 715 915**

(73) Titulaire: **ASSOCIATION POUR LA RECHERCHE ET LE DEVELOPPEMENT DES METHODES ET PROCESSUS INDUSTRIELS (ARMINES), 60, Boulevard Saint-Michel, F-75272 Paris Cédex 06(FR)**

(72) Inventeur: **Gilibert, Yvon, 11, rue Eugène Delacroix La Neuvillette, F-51100 Reims(FR)**

(74) Mandataire: **Bruder, Michel, Cabinet Michel Bruder Conseil en Brevets 10, rue de la Pépinière, F-75008 Paris(FR)**

**Description**

La présente invention concerne un procédé de mesure des contraintes principales dans des substrats transparents, homogènes et isotropes, ayant des propriétés photoélastiques, assemblés par collage pour constituer une structure collée soumise à un effort mécanique.

Il est connu d'utiliser actuellement, pour la mesure des contraintes principales dans des éprouvettes de traction, la méthode extensométrique qui fait appel à des jauges de contrainte fixées, à distance les unes des autres, en des endroits appropriés à l'extérieur de l'éprouvette. Une telle méthode présente l'inconvénient que la mise en place des jauges de contrainte externe peut perturber localement l'état de contraite des substrats sur lesquels elles sont appliquées. Par ailleurs cette méthode ne permet pas de mesurer les contraintes à l'intérieur même des substrats assemblés par collage et éventuellement au sein même du liant assurant le collage.

On sait également mesurer, par photoélasticimétrie, la différence des contraintes principales en différents points d'une éprouvette soumise à une sollicitation mécanique, notamment à un effort de traction, en un matériau transparent présentant des propriétés de biréfringence. Toutefois cette méthode n'a été appliquée jusqu'à ce jour qu'à des éprouvettes d'une seule pièce.

On connaît également, ainsi qu'il est décrit dans le brevet US-A-3 715 915, un procédé d'analyse des contraintes par photoélasticimétrie par transmission et réflexion d'un faisceau lumineux émis par une source étendue de lumière blanche. De ce fait un tel procédé connu présente une limitation importante car il permet de déterminer, lors de chaque mesure, la valeur de la contrainte dans un échantillon analysé uniquement pour toute une région relativement étendue de cet échantillon. Le résultat de cette mesure manque à l'évidence de précision.

La présente invention vise à remédier à cet inconvénient en permettant d'obtenir une mesure précise des diverses contraintes et la biréfringence résiduelle à l'état de repos soit des substrats seuls soit des substrats après collage et sous sollicitation.

A cet effet ce procédé de mesure des contraintes principales dans des substrats transparents, homogènes et isotropes, ayant des propriétés photoélastiques, assemblés par collage pour constituer une structure collée sollicitée mécaniquement, notamment en traction, est caractérisé en ce qu'on mesure successivement, par photoélasticimétrie au moyen d'un faisceau laser ponctuel transmis à travers la structure collée, d'abord la biréfringence due aux contraintes d'usinage et/ou au traitement chimique du subjectile qui existe dans chaque substrat individuel, puis la biréfringence après collage des substrats, au repos, puis la biréfringence due aux contraintes principales dans les substrats collés de la structure alors que celle-ci est sollicitée mécaniquement.

Le procédé suivant l'invention permet ainsi, par soustraction des biréfringences dues d'une part à l'usinage et/ou au traitement chimique du subjectile (le subjectile étant la surface limite rugueuse du substrat élaborée mécaniquement et/ou chimiquement sur laquelle on applique l'adhésif) et d'autre part aux efforts mécaniques appliqués, de mesurer avec précision les seules contraintes dues à l'effort mécanique ou à d'autres sollicitations extérieures (par exemple température, humidité, pression, vieillissement.).

On décrira ci-après, à titre d'exemple non limitatif, une forme d'exécution de la présente invention, en référence au dessin annexé sur lequel :

La figure 1 est un schéma synoptique d'un appareil utilisé pour la mesure des contraintes principales au moyen du procédé suivant l'invention.

La figure 2 est une vue en perspective d'une éprouvette de traction constituée par des substrats assemblés par collage.

La figure 3 est une vue en coupe transversale, par rapport au faisceau laser, de l'éprouvette de traction en cours de mesure.

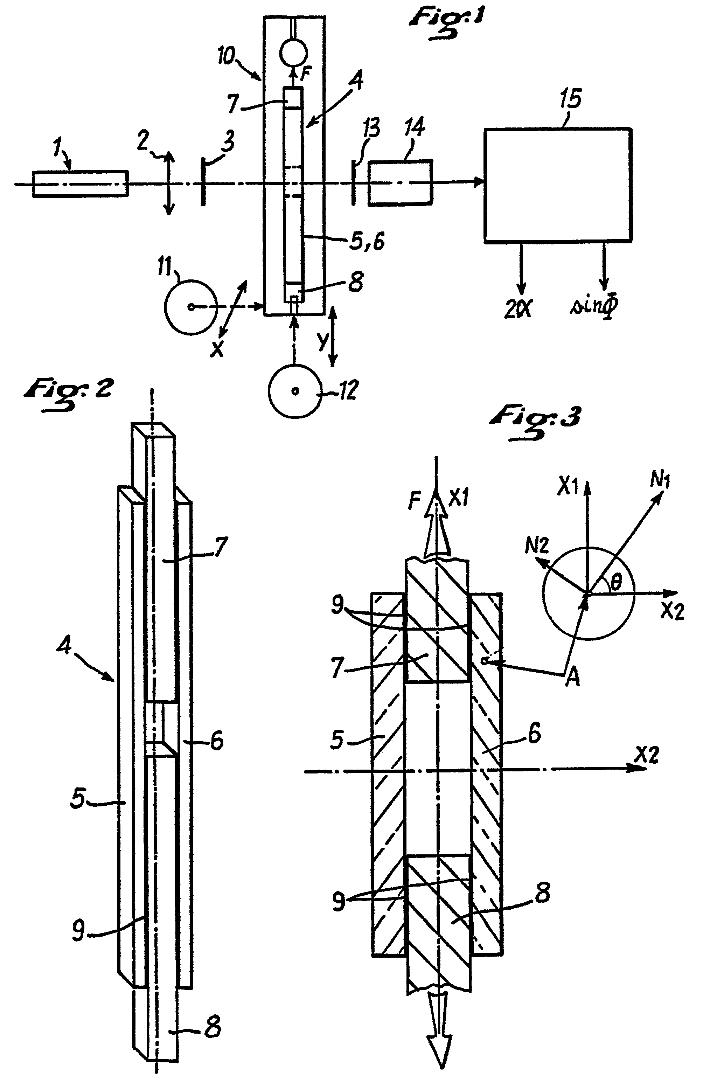

Le procédé suivant l'invention est mis en oeuvre dans un photoélasticimètre à deux dimensions comprenant une source lumineuse 1 constituée par un laser émettant un faisceau de lumière polarisée linéairement qui passe ensuite à travers une lentille convergente 2 puis à travers une plaque quart d'onde (λ/4) 3. Le faisceau lumineux ponctuel sortant de cette plaque 3, de très petit diamètre, par exemple de 0,01mm, traverse une éprouvette de traction 4 qui est constituée de plusieurs éléments assemblés entre eux par collage. Cette éprouvette de traction 4 comporte, comme on peut le mieux le voir sur les figures 2 et 3, deux barres parallèlépipédiques externes 5, 6, parallèles entre elles et entre lesquelles sont collées des parties extrêmes de deux barres parallèlépipédiques internes 7,8 qui font saillie au-delà des extrémités des barres externes 5,6. Les substrats réalisés sous la forme des barres 5-8 sont réalisés en une matière transparente, homogène et isotrope, ayant des propriétés photoélastiques, par exemple en matière connue sous le nom de "ALTUGLAS". L'assemblage des substrats constituant l'éprouvette de traction 4 est ainsi réalisé dans quatre zones de collage 9 correspondant aux parties en contact des substrats. L'éprouvette de traction 4 est portée verticalement par un support 10 sur lequel elle est soumise à un effort de traction vertical F par des moyens appropriés connus en eux-mêmes. Le support 10 peut être déplacé horizontalement et transversalement par rapport au faisceau laser, dans la direction X, par un dispositif d'entraînement approprié 11 et il peut être également déplacé verticalement, dans la direction Y, par un autre dispositif d'entraînement 12, afin de faire varier à volonté les emplacements des points de mesure A dans les substrats de l'éprouvette.

Le faisceau laser ayant traversé l'éprouvette de traction 4 passe à travers une plaque quart d'onde rotative et rétractable 13, puis un analyseur 14 constitué par un éllipsomètre quart d'onde. Cet ellipsomètre est connecté à un bloc de mesure électronique 15 qui délivre à sa sortie deux signaux de mesure à savoir un signal $2\alpha$ et un signal $\sin \phi$.

Les mesures courantes en photoélasticimétrie permettent de caractériser, de la manière classique, les deux contraintes principales N1 et N2 dans l'éprouvette. Le signal 2 permet de caractériser l'angle θ qui correspond à l'angle que fait la contrainte principale N1 (figure 3) avec la direction horizontale et transversale X2, c'est-à-dire dans le sens de l'épaisseur des substrats, en un point quelconque A de l'éprouvette. Cet angle θ est obtenu à partir de la mesure de 2α par les relations bien connues:

pour $0 < \phi < \pi$ $2\theta = 2\alpha + \pi/2$
pour $\pi < \phi < 2\pi$ $2\theta = 2\alpha - \pi/2$

Par ailleurs le procédé permet d'obtenir la valeur de l'angle Φ qui représente la différence entre les deux contraintes principales à savoir
$\Phi = N1 - N2$.

Le procédé suivant l'invention permet de corriger la mesure de la différence des contraintes principales N1 et N2 dans les substrats en éliminant les contraintes résiduelles engendrées par l'élaboration physicochimique des subjectiles des substrats. En premier lieu, avant la fabrication de la structure collée par collage des substrats, on mesure respectivement, à partir des valeurs φ et 2α, la biréfringence initiale du substrat et son orientation par rapport à l'axe de référence X2. Après avoir réalisé le collage de l'éprouvette de traction 4, on applique la sollicitation de traction pure qui engendre, dans les substrats de l'éprouvette de traction optimisée, des contraintes de traction-compression suivant l'axe X1. Le biréfringence créée par l'usinage caractérise des contraintes de compression suivant l'axe X1. Celle créée par l'effort de traction F caractérise les contraintes de traction-compression orientées aussi suivant l'axe X1. Par conséquent on peut déduire la biréfringence d'usinage de celle créée par l'effort de traction F et déterminer avec une grande précision la différence des contraintes principales, dues à l'effort de traction F, au sein des substrats assemblés par collage. Cette opération étant réalisée, on obtient alors, par séparation, les contraintes principales engendrées par l'effort de traction F.

En premier lieu, avant la fabrication de l'éprouvette par collage des substrats, on mesure, à partir des valeurs 2α et φ les contraintes principales des substrats qui résultent de l'usinage. On procède ensuite au collage et on mesure ces mêmes contraintes principales après collage des substrats 5-8 pour constituer l'éprouvette 4, sans soumettre celle-ci à un effort. Enfin on procède aux mêmes mesures au cours d'un essai en traction de l'éprouvette 4.

On peut ainsi procéder à une analyse particulièrement fine des contraintes principales apparaissant lors d'une sollicitation en traction, en faisant abstraction des contraintes statiques dues à l'usinage et au collage.

Le procédé suivant l'invention permet également de caractériser l'ancrage de l'adhésif sur son subjectile c'est-à-dire sur la zone du substrat, élaborée chimiquement et/ou mécaniquement, sur laquelle a lieu le collage. La caractérisation de l'adhésif s'effectue à partir de la courbe donnant la variation des contraintes dans l'épaisseur du substrat, c'est-à-dire suivant l'axe X2. Cette courbe varie en particulier avec la rugosité des subjectiles et/ou le traitement chimique. Elle permet donc de contrôler l'optimisation de la géométrie du subjectile rugueux pour l'adapter aux charges minérales ou autres, nodules sphériques, élastomère etc.., contenues dans l'adhésif le cas échéant.

Bien que le procédé suivant l'invention ait été décrit à propos de la mesure des contraintes dans une éprouvette 4 constituées des quatre barres parallélépipédiques 5-8 collées, il va de soi qu'il peut être appliqué à n'importe quelle structure collée constituée de substrats photoélastiques transparents, homogènes et isotropes collés. Il peut être également utilisé avec des structures collées soumises à des efforts mécaniques de différents types, par exemple de compression, flexion, torsion etc.

## Revendications

1.- Procédé de mesure des contraintes principales dans des substrats transparents, homogènes et isotropes, ayant des propriétés photoélastiques, assemblés par collage pour constituer une structure collée sollicitée mécaniquement, notamment en traction, caractérisé en ce qu'on mesure successivement, par photoélasticimétrie au moyen d'un faisceau laser ponctuel transmis à travers la structure collée, d'abord le biréfringence due aux contraintes d'usinage et/ou au traitement chimique du subjectile qui existent dans chaque substrat individuel (5-8), puis la biréfringence après collage des substrats, au repos, puis la biréfringence due aux contraintes principales apparaissant dans les substrats collés de la structure (4) alors que celle-ci est sollicitée mécaniquement.

2.- Procédé suivant la revendication 1 caractérisé en ce qu'on caractérise l'ancrage de l'adhésif sur le substrat, en fonction des propriétés physico-chimiques des subjectiles et de la colle utilisée, à partir des courbes représentant la variation des contraintes suivant un axe (X2) s'étendant dans le sens de l'épaisseur du substrat.

## Patentansprüche

1. Verfahren zum Messen von Spannungskomponenten in transparenten, homogenen und isotropen Substraten mit photoelastischen Eigenschaften, die durch Verkleben zusammengesetzt sind, um eine verklebte, vorzugsweise in Zugrichtung mechanisch belastete Struktur zu bilden, dadurch gekennzeichnet, daß man fortschreitend durch photoelastische Messungen mittels eines Laserstrahlbündels, das punktuell quer durch die verklebte Struktur gesandt wird, zunächst die Doppelbrechung mißt, die auf Berarbeitungsspannungen und/oder die chemischen Behandlung der Oberfläche zurückgeht und die bei jedem individuellen Substrat (5–8) vorhanden ist, sodann die Doppelbrechung nach dem Verkleben der Substrate und in Ruhe, und schließlich die Doppelbrechung aufgrund der Hauptspannungen, die in dem verklebten Substraten der Struktur (4) auftreten, wenn die mechanischen Belastungen ausgesetzt wird.

2. Verfahren nach Anspruch 1, dadurch gekennzeichnet, daß man die Haftung des Klebemittels auf dem Substrat als Funktion der physikalisch-chemischen Eigenschaften der Oberflächen und des benutzten Klebemittels charakterisiert, ausgehend von Kurven, welche die Veränderung der Spannungen längs einer sich in Richtung der Dickenabmessung des Substrats erstreckenden Achse (X2) darstellen.

**Claims**

1. Process for measuring the principal stresses in transparent, homogeneous and isotropic substrates, having photoelastic properties, assembled by gluing to constitute a glued structure mechanically stressed, particularly in traction, characterized in that there are successively measured, by photoelastimetry by means of a punctual laser beam transmitted through the glued structure, firstly the birefrigence due to the machining stresses and/or to the chemical treatment of the support which exist in each individual substrate (5–8), then the bifrefringence after gluing of the substrates, at rest, then the birefrigence due to the principal stresses appearing in the glued substrates of the structure (4) whilst the latter is mechanically stressed.

2. Process according to Claim 1, characterized in that the anchoring of the adhesive on the substrate is characterized, as a function of the physicochemical properties of the supports and of the glue used, from the curves representing the variation of the stresses along an axis (X2) extending in the direction of the thickness of the substrate.

EP 0 251 894 B1

*Fig. 1*

*Fig. 2*

*Fig. 3*